# EUROPEAN PATENT SPECIFICATION

(11) **EP 1 262 802 B1**
(45) Date of publication and mention of the grant of the patent: **24.08.2005**
(21) Application number: 01202053.3
(22) Date of filing: 31.05.2001
(51) Int. Cl.: G02B 5/128

(54) **Reflective sheet treated with fluorosilane**
Mit Fluorosilan behandelte reflektierende Folie
Feuille réfléchissante traitée avec fluorosilane

(43) Date of publication of application: 04.12.2002
(73) Proprietor: 3M Innovative Properties Company, Minnesota 55133-3427 (US)
(72) Inventor: Erb, Volker, B 1831 Diegem (BE); Loosen, Dorothée, B 1831 Diegem (BE)
(74) Representative: Voortmans, Gilbert J.L.

(56) References cited:
- EP-A- 0 588 242
- WO-A-01/02883
- GB-A- 2 347 366
- PATENT ABSTRACTS OF JAPAN vol. 1997, no. 03, 31 March 1997 (1997-03-31) & JP 08 309929 A (UNITIKA LTD), 26 November 1996 (1996-11-26)

## Description

### Field of the Invention

The invention relates to a reflective sheet that comprises at a major surface, microspheres that are partially exposed. In particular, the present invention relates to such reflective sheets that have been treated with a fluorochemical compound at this major surface. The invention further relates to a method of making the reflective sheet.

### Background

Reflective sheets are well known and are utilized widely to improve visibility for both stationary and moving objects, including vehicles and persons, particularly under low-light conditions. Commonly used reflective sheets typically comprise a layer of microspheres such as glass beads. These microspheres will generally focus, i.e. they act as lenses, the incident light falling on the reflective sheet surface onto a reflective element such as metal particles or a metal layer. The microspheres may further focus the light that is reflected back from these reflective elements.

Reflective sheet materials that make use of microspheres are frequently applied to fabrics, for example, in the manufacture of safety clothing or to increase visibility and safety of people in traffic, particularly at night time, by applying the reflective sheeting to work wear, sports wear and rain wear as well as accessories such as caps, school bags and gloves. The reflective sheet material can be attached to the garment or accessory by any means including sewing, adhering by means of adhesives and heat-welding.

In the art, several basic types of microsphere-containing materials are known. On the one hand, so-called embedded or encapsulated lens type sheetings are known in which the microspheres are covered by a transparent resin layer, i.e. they are fully buried and not exposed to air. The second type of reflective sheeting having microspheres is the so-called open-bead or open-lens material in which the microspheres are partially exposed to air, i.e. they are not completely buried in a binder layer. A third type of microsphere sheeting is similar to the second type, with the exception that a polymeric cover film is heat-sealed intermittently over the microsphere-bearing surface of the reflective sheet. The microspheres in the enclosed lens sheeting are exposed to air (beneath the polymeric cover film), but are not exposed to the elements such as rainfall and are not considered to be open-bead sheeting.

A particular disadvantage of the open-bead reflective sheeting is its reduced reflectivity under rainfall conditions. Moreover, the reflectivity of the sheeting often diminishes after several launderings.

JP 08-309929 discloses treating the exposed glass bead of an open-bead type reflective sheet with a combination of a fluorochemical compound and a silane coupling agent. As the fluorochemical compound, there is taught a perfluoroalkyl acrylic acid ester. Also, it is recommended to additionally use a melamine resin or an isocyanate cross-linking agent so as to further improve the durability of the treatment. However, although it is shown that such treatment improves the reflectivity under rainfall conditions, the method has the disadvantages that several components are needed which may often not be compatible with each other so that they may need to be applied in separate treatment steps resulting in an increased manufacturing cost and reduced convenience. Further, the treatment disclosed in this prior art may also provide an additional environmental burden.

GB 2347366 discloses a retroreflective tape having a hemispherically metallized layer or microbeads that are held in a melt adhesive coating on a web. In one embodiment, the retroreflective tape is treated with a perfluorosilane on the exposed unmetallized face of the tape.

Accordingly, it would be desirable to further improve the reflective properties of open-bead reflective sheet materials preferably in efficient and convenient way, in particular in a cost effective way. Further it would be desirable to improve, the reflective properties of the open-bead reflective sheet material under rainfall conditions. Preferably the durability of the reflective properties is improved as well.

### Summary of the invention

The invention, in a first aspect, provides a reflective sheet that comprises a reflective element and that comprises microspheres partially exposed at a major surface of the reflective sheet. The reflective sheet has further been treated with a fluorinated silane compound that has a fluorinated polyether group and a silane group having one or more hydrolyzable groups. By the term "reflective element" is meant an element that is capable of reflecting a major portion (generally at least 50%) of incident light.

It was found that the reflective sheets treated with the fluorinated silane compounds have improved reflective properties. In particular, the reflectivity of the sheets under dry conditions is generally improved compared to the untreated sheet. Furthermore, the reflectivity of the sheet under wet conditions, in particular rainfall conditions, is typically improved as a result of the treatment. The durability of the reflective properties, particularly after repeated launderings, was generally improved as well.

In a further aspect, the invention discloses a method of making a reflective sheet comprising the steps of(i) providing a reflective sheet comprising a reflective element and comprising microspheres partially exposed at a major surface of said reflective sheet and (ii) treating said major surface of said reflective sheet with a fluorinated silane compound having a fluorinated polyether group and a silane group that has one or more hydrolyzable groups.

### Detailed description

### The fluorosilanes

Fluorinated silane compounds suitable for use in the treatment of the reflective sheets of the present invention comprise at least a fluorinated polyether group and at least one silane group having one or more hydrolyzable groups. By the term "hydrolyzable group" is meant that the groups are capable of hydrolyzing under the conditions used to apply the fluorinated silane to the reflective sheet. Such conditions may involve the use of a catalyst such as an acid or base. Examples of suitable hydrolyzable groups include alkoxy groups, aryloxy groups, halogens such as chlorine, acetoxy groups and acyl groups. Generally preferred are lower alkoxy groups having 1 to 4 carbon atoms.

The fluorinated silane compound may contain one or more, for example two or three, silane groups linked directly to a fluorinated group or that may be linked to a fluorinated group through an organic linking group. Such an organic linking group is generally a non-fluorinated group such as a hydrocarbon group and may contain one or more heteroatoms.

The fluorinated group of the silane comprises polyether fluorinated polyether groups. The fluorinated group of the fluorinated silane may be partially or fully fluorinated and may be monovalent or multivalent, e.g. divalent.

Preferred fluorinated silane compounds for use in this invention are partially or fully fluorinated silanes corresponding to the formula:

R_{f}¹-[-Q-SiY₃₋ₓR¹ ₓ]_{y} (I)

wherein
R_{f}¹ represents a monovalent or divalent polyfluoropolyether group,
Q represents an organic divalent linking group,
R¹ represents a C₁-C₄ alkyl group,
Y represents a hydrolyzable group;
x is 0 or 1 and
y is 1 or 2.

R¹_{f} represents a monovalent or divalent polyfluoropolyether group. The polyfluoropolyether group can include linear, branched, and/or may contain cyclic structures, and may be saturated or unsaturated. It is preferably a perfluorinated group (i.e., all C-H bonds are replaced by C-F bonds). More preferably, it includes perfluorinated repeating units selected from the group of
-(CₙF₂ₙ)-, -(CₙF₂ₙO)-, -(CF(Z))-, -(CF(Z)O)-, -(CF(Z)CₙF₂ₙO)-, -(CₙF₂ₙCF(Z)O)-,
-(CF₂CF(Z)O)-, and combinations thereof. In these repeating units Z is a perfluoroalkyl group, an oxygen-substituted perfluoroalkyl group, a perfluoroalkoxy group, or an oxygen-substituted perfluoroalkoxy group, all of which can be linear, branched, or cyclic, and preferably have about 1 to about 9 carbon atoms and 0 to about 4 oxygen atoms. Examples of polyfluoropolyethers containing polymeric moieties made of these repeating units are disclosed in U.S. Pat. No. 5,306,758 (Pellerite). For the monovalent polyfluoropolyether group (wherein y is 1 in formula I above), the terminal groups can be (CₙF₂ₙ₊₁)-, (CₙF₂ₙ₊₁O)- or (X'CₙF₂ₙO)-, wherein X' is H, Cl, or Br, for example. Preferably, these terminal groups are perfluorinated. In these repeating units or terminal groups, n is 1 or more, and preferably 1 to 4.

Preferred approximate average structures for a divalent fluorinated polyether group include -CF₂O(CF₂O)ₘ(C₂F₄O)ₚCF₂-, wherein an average value for m and p is 0 to 50, with the proviso that m and p are not simultaneously 0,
-CF(CF₃)O(CF(CF₃)CF₂O)ₚCF(CF₃)-, -CF₂O(C₂F₄O)ₚCF₂-, and -(CF₂)₃O(C₄F₈O)ₚ(CF₂)₃-, wherein an average value for p is 3 to 50. Of these, particularly preferred approximate average structures are -CF₂O(CF₂O)ₘ(C₂F₄O)ₚCF₂-, -CF₂O(C₂F₄O)ₚCF₂-, and
-CF(CF₃)O(CF(CF₃)CF₂O)ₚCF(CF₃)-. Particularly preferred approximate average structures for a monovalent perfluoropolyether group include C₃F₇O(CF(CF₃)CF₂O)ₚCF(CF₃)- and CF₃O(C₂F₄O)ₚCF₂- wherein an average value for p is 3 to 50. As synthesized, these compounds typically include a mixture of polymers. The approximate average structure is the approximate average of the mixture of polymers.

The divalent linking group Q can include linear, branched, or cyclic structures, that may be saturated or unsaturated. The group Q can contain one or more heteroatoms (e.g., oxygen, nitrogen, or sulfur) or functional groups (e.g., carbonyl, amido, urethanylene or sulfonamido). Preferably, the divalent linking group Q is a non-fluorinated organic group such as a hydrocarbon group, preferably, a linear hydrocarbon group, optionally containing heteroatoms or functional groups, and more preferably, containing at least one functional group. Examples of Q groups include -C(O)NH(CH₂)₃-, -CH₂O(CH₂)₃-, -CH₂OC(O)N(R)(CH₂)₃-, wherein R is H or lower alkyl group, and -(CₙH₂ₙ)-, wherein n is about 2 to about 6. A typical linking group Q is -C(O)NH(CH₂)₃-.

Y represents a hydrolyzable group in formula (I) such as for example a halogen, a C₁-C₄ alkoxy group, an acyloxy group, an acyl group or a polyoxyalkylene group, such as polyoxyethylene groups as disclosed in US 5,274,159. Specific examples of hydrolyzable groups include methoxy, ethoxy and propoxy groups, chlorine and an acetoxy group.

Compounds of formula (I) suitable for use in treating reflective sheets of the present invention typically have a molecular weight (number average) of at least about 200, and preferably, at least about 1000. Preferably, they are no greater than about 10000.

Examples of preferred fluorinated polyether silane compounds include, but are not limited to, the following approximate average structures:
XCF₂O(CF₂O)ₘ(C₂F₄O)ₚCF₂X, C₃F₇O(CF(CF₃)CF₂O)ₚCF(CF₃)X, XCF(CF₃)O(CF(CF₃)CF₂O)ₚCF(CF₃)X, XCF₂O(C₂F₄O)ₚCF₂X, and CF₃O(C₂F₄O)ₚCF₂X, X(CF₂)₃O(C₄F₈O)ₚ(CF₂)₃X, wherein -X is -Q-SiY₃₋ₓRₓ¹ as defined above in formula (I) or a nonsilane-containing terminal group as defined above ((CₙF₂ₙ₊₁)-, (CₙF₂ₙ₊₁O)- or (X'CₙF₂ₙO)- wherein X' is H, Cl, or Br), with the proviso that at least one X group per molecule is a silane). Preferably, in each fluorinated polyether silane, Q contains a nitrogen atom. More preferably, at least one X group per molecule is C(O)NH(CH₂)₃Si(OR)₃ (wherein R is methyl, ethyl, polyethyleneoxy or mixtures thereof), and the other X group, if not a silane, is OCF₃, or OC₃F₇. The values of m and p in these approximate average structures can vary. Preferably, an average value of m is within a range of about 1 to about 50, and an average value of p is within a range of about 4 to about 40. As these are polymeric materials, such compounds exist as mixtures upon synthesis, which are suitable for use. These mixtures may also contain perfluoropolyether chains bearing no functional groups (inert fluids) or more than two terminal groups (branched structures) as a consequence of the methods used in their synthesis. Typically, mixtures of polymeric materials containing less than about 10% by weight of non-functionalized polymers (e.g., those without silane groups) can be used. Furthermore, mixtures of any of the individually listed compounds of formula I can be used.

Compounds of formula (I) can be synthesized using standard techniques and are commercially available. For example, commercially available or readily synthesized fluorinated polyether esters can be combined with a functionalized alkoxysilane, such as a 3-aminopropylalkoxysilane, according to U.S. Pat. No. 3,810, 874 (Mitsch et al.). Such materials may or may not need to be purified before use in a method of treatment.

### REFLECTIVE SHEET

The reflective sheet employed in the present invention comprises a major surface bearing microspheres that are exposed at least partially to the air interface. The microspheres may be partially embedded in a matrix, but have at least part of their surface exposed. The reflective sheet of the present invention is what is known in the art as an open-bead reflective sheet. The microspheres of the reflective sheet employed in the present invention are not covered by a transparent polymeric layer as they are in other well known versions of reflective sheets, often referred to as enclosed lens reflective sheets.

### Microspheres

The microspheres preferably are substantially spherical in shape to provide uniform and efficient retroreflection. The microspheres also preferably are substantially transparent to minimize light absorption by the microspheres and thereby optimize the amount of light that is retroreflected by the article. The term transparent means that when viewed under an optical microscope (eg., at 100X) the microspheres have the property of transmitting rays of visible light so that bodies beneath the microspheres, such as bodies of the same nature as the microspheres can be clearly seen through the microspheres, when both are immersed in oil of approximately the same refractive index as the microspheres. The outline, periphery or edges of bodies beneath the microspheres are clearly discernible. Although the oil should have a refractive index approximating that of the microspheres, it should not be so close that the microspheres seem to disappear as would be the case for a perfect match. The microspheres typically are substantially colorless but may be colored to produce special effects.

Transparent microspheres may be made from inorganic materials, such as glass or a non-vitreous ceramic composition, or can be made from organic materials such as a synthetic resin which possesses the required optical properties and physical characteristics needed for retroreflection. In general, glass and ceramic microspheres are preferred because they can be harder and more durable than microspheres made from synthetic resins.

Microspheres used in the present invention preferably have an average diameter of about 30 to 200 micrometers (µm), more preferably 40 to 90 µm. Microspheres smaller than 30 µm may tend to provide lower levels of retroreflection because of diffraction effects; whereas, microspheres larger than 200 µm may tend to impart undesirably rough texture to the article or undesirably reduce the flexibility thereof Microspheres used in this invention preferably have a refractive index of about 1.7 to about 2.0, the range typically considered to be useful in microsphere-based retroreflective products where, as here, the front surface of the microspheres are exposed or air-incident. Examples of microspheres that may be useful in the present invention are disclosed in the following U.S. Pat. Nos.: 1,175,224, 2,461,011, 2,726,161, 2,842,446, 2,853,393, 2,870,030, 2,939,797, 2,965,921, 2,992,122, 3,468,681, 3,946,130, 4,192,576, 4,367,919, 4,564,556, 4,758,469, 4,772,511, and 4,931,414.

The refractive index and the size of the microsphere are selected so that the microsphere focuses the incident light at a point roughly coincident with the location of the reflective layer. By appropriate selection of these parameters, the microsphere can easily focus the incident light at a point near the back surface of the microsphere or slightly behind the surface of the microsphere.

### Reflective element

The reflective sheet further comprises a reflective element in order to reflect light. The reflective element may comprise metal pigments or a metal layer. For example a reflective metal layer may be selected from aluminum, tin, silver, chromium, nickel, magnesium, gold or platinum. The term "reflective metal layer" is used herein to mean a layer comprising elemental metal in pure or alloy form which is capable of reflecting light, preferably specularly reflecting light. A typical reflective metal layer preferably comprises a metal such as aluminum or silver and generally has a thickness of 50 to 150 nanometers. Reflective metal layers having a thickness in this range are generally continuous coatings prepared by vacuum-deposition, vapor coating-chemical deposition or electroless plating techniques. Vacuum-deposition techniques are preferred.

Alternatively, the reflective element may comprise reflective pigments such as, for example, mica powder, metal particles or flakes or pearlescent type pigments.

### Binder layer

The microspheres are generally partially embedded in a binder layer. The binder layer typically comprises a fluid-impermeable polymeric sheet like layer that serves to stabilize the reflective sheet and support the reflective optical system comprising the reflective element (e.g. a thin metal layer) and the microspheres.

Various known materials may be employed as the binder layer including various one and two-part curable binders, as well as thermoplastic binders wherein the binder attains a liquid or softened state via heating until molten. Common binder materials include polyacrylates, methacrylates, polyolefins, polyurethanes, polyepoxide resins, phenolic resins and polyesters. Binder layers comprising compositions that are durable, resistant to laundering and non-corrosive to the adjacent reflective elements are preferred. The binder layer of the reflective sheet may be used to bind the microsphere layer and reflective element to a desired substrate. The binder layer may also comprise a polymer composition which has inherent properties of an adhesive as described in US 5,674,605 (Marecki), so that the binder layer may be used in certain instances to bond the reflective sheet to a garment or accessory without the use of additional adhesive layers.

The binder layer may be transparent, but commonly comprises additives such as, for example, metal-azo dyes as described in US 5,338,595 (Li), designed to camouflage undesirable color changes after repeated laundering and or other pigments to provide special colors and visual effects.

An adhesion promoter may also be present in the binder layer in the amounts of 0.2% to about 1.5% by weight. Adhesion promoters are commonly aminosilanes such as aminomethyltrimethoxysilane, aminopropyltriethoxysilane, etc.

Additives in the binder layer may also include colorants (for example, pigments and dyes) and stabilizers (for example, thermal and hydrolytic stabilizers and antioxidants), flame retardants, flow modifiers (for example surfactants), rheology modifiers (for example , thickeners), coalescing agents, plasticizers, tackifiers and the like.

The binder layer preferably has a thickness of about 50 to 250 µm, more preferably about 75 to 200 µm. A binder layer having a thickness outside these ranges may be used. However, if the binder layer is too thin, it may not provide sufficient support to the retroreflective element and the microspheres and the microspheres may become dislodged. If the binder layer has a thickness of over 200 µm, it may unnecessarily stiffen the article and add to its cost.

### Additional layers

The reflective sheet may comprise further layers. These layers may for example serve to provide additional support and handleability of the reflective sheet or may be present to provide adhesion characteristics to be used for attachment of the reflective sheet to a substrate such as a safety garment or accessory. Examples of additional layers include a woven or non-woven web, a heat-activated adhesive layer, a pressure-sensitive adhesive layer or combinations of these layers. Particularly preferred is the use of a woven web as an additional layer so that a reflective fabric is generated.

A woven or non-woven web may be composed of any known fiber materials including for example polyamide, polyester, polyacylate, polyacylonitrile fibers as well as natural fibers such as cotton. Mixed fibers including mixed synthetic and natural fibers can be used as well.

Suitable adhesive layers for use with the reflective sheet include for example, a heat-activated adhesive, comprising a polyester, polyurethane or vinyl-based polymer, or a normally tacky pressure-sensitive adhesive comprising an acrylic polymer, a rubber-resin based system or a silicone-based polymer.

Specific combinations of additional layers include 1) a pressure-sensitive adhesive layer with a fabric and 2) a pressure-sensitive adhesive layer in combination with a heat-activated adhesive layer. In the two combinations just described, the pressure-sensitive adhesive is arranged so that it is exposed in order to form a bond with the substrate or garment.

A still further additional layer that can be present in the reflective sheet is a so-called light-transmissible intermediate layer that is typically arranged between the microspheres and the reflective element, e.g. a reflective metal layer. The light-transmissible intermediate layer can be provided to protect the reflective element from corrosion and deterioration in its reflective characteristics during exposure to the natural elements and/or laundering. The intermediate layer preferably comprises a transparent polymeric layer having optical characteristics such as refractive index which are selected so as to provide a functional retroreflective optical system.

The light-transmissible intermediate layer generally comprises a polymeric material that may be the same as or different from the polymeric material of the binder layer. To provide good laundering durability, the polymer preferably is a crosslinked polymer. Examples of polymers that may be suitable include those that contain units of urethane, ester, ether, urea, epoxy, carbonate, acrylate, acrylic, olefin, vinyl chloride, amide, alkyd, or combinations thereof

The polymer that is used in the light-transmissible intermediate layer may have functional groups that allow the polymer to be linked to the silane coupling agent, or the reactants that form the polymer may possess such functionality. For example, in producing polyurethanes, the starting materials may possess hydrogen functionalities that are capable of reacting with an isocyanate-functional silane coupling agent; see for example, U.S. Pat. No. 5,200,262 (Li). Preferred polymers are crosslinked poly(urethane-ureas) and crosslinked poly(acrylates). These polymers can maintain their properties under the rigors of the industrial laundering process and when being worn as clothing.

Poly(urethane-ureas) may be formed by reacting a hydroxy-functional polyester resin with excess polyisocyanate. Alternatively, a polypropylene oxide diol may be reacted with a diisocyanate and then with a triamino-functionalized polypropylene oxide.

Crosslinked poly(acrylates) may be formed by exposing acrylate oligomers to electron beam radiation; see for example, U.S. Pat. No. 5,283.101 (Li).

Examples of commercially available polymers that may be used in the light-transmissible intermediate layer include: Vitel™ 3550 available from Shell Oil Company, Akron, Ohio; Ebecryl™ 230 available from UBC Radcure. Smryna, Ga; Jeffamine™ T-5000, available from Huntsman Corporation, Houston. Tex.; and Arcol™ R-1819, available from Arco Chemical Company, Newtown Square, Pa.
The thickness of the light-transmissible intermediate layer is generally selected such that incident light can be focussed on the reflective metal layer by the microspheres. The light-transmissible intermediate layer typically has an average thickness from about 5 nanometers to 1.5 times the average diameter of the microspheres. Preferably, the light-transmissible intermediate layer has an average thickness from about 100 nanometers to about the average diameter of the microspheres. More preferably, the light-transmissible intermediate layer's average thickness is about one (1) micrometer to about 0.25 times the average diameter of the microspheres. The light-transmissible intermediate layer thickness may be greater between the microspheres than on the microspheres. The light-transmissible intermediate layer preferably is continuous, but there may be some very small regions-particularly at the most embedded portion of the microspheres--where the light-transmissible intermediate layer is discontinuous, i.e., its thickness is zero or approaches zero. Thus, the light-transmissible intermediate layer is conveniently continuous or substantially continuous.

Various constructions of the reflective sheet may be used. For example, in a first embodiment, the reflective sheet comprises a layer of microspheres partially exposed at the first major surface of the reflective sheet to air, a light-transmissible intermediate layer, a metal layer as the reflective element and a binder layer. In this first embodiment of the reflective sheet, light falls upon the surface of the microspheres, is focussed upon the reflective metal layer located at a specific distance behind the non-exposed part of the microsphere through the selected thickness of the light-transmissible intermediate layer and is then reflected back through the microsphere to the observer. Accordingly, a highly retroreflective sheet is obtained. On the binder layer there may be provided additional layers such as for example a woven or non-woven web.

In a second embodiment of the reflective sheet, the reflective element comprises a reflective metal layer that is provided directly on the microspheres and that thus generally follows the contours of the non-exposed part of the microspheres. No light-transmissible intermediate layer is present. The reflective layer in this embodiment comprises a thin metal layer preferably applied directly to the non-exposed part of the microsphere by vacuum-deposition techniques. Typically, a binder layer and additional layers are further provided on the thin metal layer as in the first embodiment.

In a third embodiment of the reflective sheet, the reflective element comprises a binder having distributed therein one or more reflective pigments. The pigment may comprise, for example, particles or flakes, preferably comprising silver, tin or aluminum, titanium dioxide particles or mica particles. In this embodiment, the microspheres are partially embedded in a binder layer containing metal particles. In the third embodiment of the reflective sheet, light falls upon the surface of the glass beads, is focussed upon the binder layer comprising reflective pigments and then is reflected back through the microsphere to the observer.

### Manufacture of the reflective sheet

The manufacturing of the open-bead reflective sheet is well known in the art. A two-layer carrier web comprising a heat-softenable polymer layer on a paper sheet is first provided. The upper heat-softenable polymer layer of the carrier web is then softened by heating to a temperature of 80 to 120°C and the microspheres are coated thereon in a temporary arrangement. Polymers which may be used for the heat-softenable polymer layer include polyvinylchloride; polyolefins such as polyethylene, polypropylene and polybutylene; and polyester; etc. The microspheres are partially embedded in the polymer layer of the carrier typically to about 40 to about 60 percent of the microspheres' diameter. The microspheres are preferably packed as closely as possible on the carrier and may be so arranged by any convenient process, such as printing, screening, cascading or with a hot can roll.

The heat-softenable polymer layer of the carrier web retains the microspheres in the desired arrangement while the reflective sheeting is being built up. Depending in part on the characteristics of the carrier web and the microspheres, it may be desirable to condition the carrier web and/or the microspheres by applying selected release agents or adhesion promoters to achieve desired carrier release properties. The reflective element, such as a metal layer, for example, is then applied to the carrier web on the side from which the microspheres protrude.

The binder layer is then applied by traditional coating techniques and cured in place under conditions determined by the binder layer chemistry employed.

After the binder layer has been formed, the carrier web can be stripped or separated from the reflective sheet, allowing the sheet to be used for its intended purpose.

Additional layers such as woven webs and adhesive layer may be provided by coating or lamination, as appropriate, either before or after the carrier web is removed to expose the air-incident surface of the microspheres.

For example, to obtain the reflective sheet of the first embodiment, a light-transmissible intermediate layer is coated on the exposed surface of the microspheres and then a reflective metal layer is provided thereon through vacuum-deposition, for example, and finally a binder layer may be provided to the reflective metal layer.

To obtain the reflective sheet of the second embodiment, the light-transmissible intermediate layer is omitted and the reflective metal layer is deposited directly on the exposed surface of the microspheres.

To obtain the reflective sheet of the third embodiment, the binder layer containing the reflective particles is coated directly onto the microspheres supported in the heat-softenable polymer layer of the carrier web.

### TREATMENT METHOD

In order to obtain the improved reflective properties of the reflective sheet, the reflective sheet is treated with the fluorinated silane at the major surface having the exposed microspheres. The fluorinated silane compound is generally applied to the surface of the reflective sheet in amounts sufficient to produce a coating which yields a desired improvement of the reflective properties. This coating can be extremely thin, e.g. 1 to 50 molecular layers, though in practice a useful coating may be thicker.

The fluorinated silane compound can be applied to the major surface of the reflective sheet bearing the microspheres without dilution, but is preferably applied to the surface from a treatment composition comprising the fluorinated silane in a diluted form. Typically, the treatment composition will comprise the fluorinated silane in an amount of 0.05 % by weight to 10 % by weight, preferably between 0.10 % by weight and 1.0 % by weight. The treatment composition will generally be based on an organic solvent, i.e. the organic solvent may form a major component of the treatment composition.

The fluorinated silane compound is preferably dissolved or dispersed in one or more organic solvents. The organic solvent or blend of organic solvents used preferably is capable of dissolving at least 0.01% by weight of the fluorinated silane compound. Furthermore, the solvent or mixture of solvents preferably have a solubility for water of at least 0.1% by weight and a solubility for acid of at least 0.01% by weight. If the organic solvent or mixture of organic solvents do not meet these criteria, it may not be possible to obtain a homogeneous mixture of the fluorinated silane compound in the solvent(s) when water is present.

Suitable organic solvents, or mixtures of solvents can be selected from aliphatic alcohols, such as methanol, ethanol, isopropyl alcohol; ketones such as acetone or methyl ethyl ketone; esters, such as ethyl acetate, methylformiate and ethers, such as diisopropyl ether. Fluorinated solvents may be used in combination with the organic solvents in order to improve solubility of the fluorosilane compound.

Examples of fluorinated solvents include fluorinated hydrocarbons, such as perfluorohexane or perfluorooctane, available from 3M; partially fluorinated hydrocarbons, such as pentafluorobutane, available from Solvay, or CF₃CFHCFHCF₂CF₃, available from DuPont; hydrofluoroethers, such as methyl perfluorobutyl ether or ethyl perfluorobutyl ether, available from 3M. Various blends of these materials with organic solvents can be used.

To achieve good durability, particularly with respect to mechanical washing or laundering, the solutions used in the treatment method of the present invention may include water. Typically, the amount of water will be between 0.1 and 20 % by weight, preferably between 0.5% by weight and 15% by weight, more preferably between 1 and 10% by weight.

In addition to water, compositions used in the treatment method of the present invention may also include an acid or base catalyst. The acid catalyst, if present, comprises an organic or inorganic acid. Organic acids include acetic acid, citric acid, formic acid and the like. Examples of inorganic acids include sulphuric acid, hydrochloric acid and the like. The acid will generally be included in the composition in an amount between about 0.01 and 10%, more preferably between 0.05 and 5% by weight. The base catalyst, if present, comprises for example sodium or potassium hydroxide.

Any number of coating techniques may be utilized to apply the treating composition to the surface of the reflective sheet. These methods include spraying, dipping, gravure printing, screen printing, tampon printing, transfer coating, knife coating, kiss coating and Foulard application techniques. A preferred method of application is kiss coating, described in more detail in the Examples below.

In cases where the fluorinated silane compound is applied to the reflective sheet as a solution, drying steps are preferably incorporated into the method to allow for removal of the solvent to produce the finished coating of fluorinated silane on the surface of the reflective sheet.

The drying steps may comprise one or more phases effecting evaporation of solvents under ambient conditions and/or utilization of forced air ovens at elevated temperatures to accelerate removal of solvents and/or accelerate the reaction of the fluorinated silane compound with the surface of the reflective sheet.

Preferably, the method of making the reflective sheet includes at least one step of exposing the reflective sheet bearing the fluorinated silane compound to heat by passing the reflective sheet through an oven set at a temperature of between 50°C and 180°C.

The following examples further illustrate the invention without the intention however to limit the invention thereto.

### Examples

### Test Methods

### Measurement of Retroreflectivity of Reflective Sheets, R'

Retroreflectivity of the retroreflective sheet was measured according to the International commission on Illumination or CIE (Commission Internationale de l'éclairage) 54: 1982 Retroreflection: Definition and Measurement.

Samples were measured at an observation angle (α) of 0.2° and an entrance angle (β1) of 5°. Results were recorded in candela per lux per sq. meter (cd/lx/m²).

### Measurement of Wet Retroreflectivity of Reflective Sheets, R'

Measurement of the retroreflectivity of reflective sheets under simulated rainfall conditions was measured in general according to the CIE method above but under conditions described specifically in EN 471 ANNEX A - Method of Measuring Wet Retroreflective Performance. The measurement was made during continuing simulated rainfall conditions, but after 5 minutes had passed.

Samples were measured at an observation angle (α) of 0.2° and an entrance angle (β1) of 5°. Results were recorded in cd/lx/m².

### Washing procedure for retroreflective sheets

Both treated and untreated samples of retroreflective fabric were laundered according to ISO 26330 Textiles - Domestic Washing and Drying Procedures for Textile Testing.

Washing was performed in domestic washing machines at 60°C and the number of cycles is given in the data tables below.

### Materials employed in the Examples

Fluorosilanes:
(A) Fluorinated polyether disilane Fluorinated polyether silane (A) was prepared by reacting perfluoropolyetherdiester
   CH₃OC(O)CF₂(CF₂O)₉₋₁₁(CF₂CF₂O)₉₋₁₁CF₂C(O)OCH₃ (with an average molecular weight of about 2000), commercially available from Ausimont, Italy, under the trade designation Z-DEAL, with 3-aminopropyltrimethoxysilane, available from Aldrich Company Co., as taught in US 3,810,874 (Mitsch et al.), table 1, line 6. The exothermic reactions proceeded readily at room temperature, simply by mixing the starting materials. The progress of the reaction was monitored by infrared analysis.
(B) Perfluoro-octyl trichloro silane F₁₇CₓSiCl₃, (97 %)

Available as catalog number 44893- 1 from Sigma-Aldrich Chemie GmbH (Steinheim, Germany).

### Example 1

A retroreflective fabric web (30 cm wide by 50 m long) described above as the first embodiment of the reflective sheet was treated with a solution of 0.1 wt % solution of fluorinated polyether silane (A) in a mixture of water (3 wt. %), acetic acid (1.5 wt. %) and ethanol (95.4 wt. %). The solution was placed in a shallow bath and the retroreflective surface of the fabric was passed through the bath in a method known as kiss coating. The retroreflective fabric was firmly backed up by a moving roller and the fabric was exposed to the solution of fluorinated polyether silane in the bath in a manner so that the surface of the fabric briefly came into contact with the surface of the solution in the bath. The fabric was not soaked or saturated and very little solution penetrated around the edges of the web to the rear surface of the fabric. The fabric was advanced at a rate of 4 m/minute.

The web was advanced for ca. 3 m under ambient condition to allow for preliminary evaporation of solvents and then passed through a series of forced-air drying ovens at increasing temperatures from 50° to 120°C to effect solvent removal and curing of the coating. Total length of the drying ovens was ca. 10 m.

Samples having a dimension of 10 cm x 10 cm were cut from the center of the web randomly along its length.

Retroreflectivity of the treated fabric was measured according to EN 471, Part 7.3 under both dry and wet conditions. For wet retroreflectivity measurements the samples of retroreflective fabric were first sewn to 65/35 polyester cotton fabric having a weight of 215 g/m² available as GNEIS, fabric number 42040 from Lauffenmuehle Textil GmbH (Lauchingen, Germany). Each of the 10 cm x 10 cm samples was sewn to a large sheet of the polyester cotton fabric having the dimensions of ca. 80 cm x 60 cm.

Samples oftreated fabric borne on the polyester cotton sheet were then washed 35 cycles at 60° C in a domestic washing machine according to the washing procedure given in ISO 26330 Method 2A and then line dried. Washed samples were again tested for their retroreflectivity under both dry and wet conditions. Measurements on wet fabrics were performed after 5 minutes of continuing simulated rainfall.

Results of the reflectivity measurements are summarized in Table 1.

### Example 2

Example 1 was repeated, with two exceptions. The solution of fluorinated polyether silane (A) used to treat the reflective fabric had a concentration of 0.2 % by weight in the solvent mixture described in Example 1. The fluorosilane was in this case applied to a second reflective fabric, described above as the second embodiment of the reflective sheet.

Reflectivity measurements were made under the same conditions as the treated fabric of Example 1. Results are summarized in Table 1.

### Example 3 (comparative)

Example 1 was repeated except that the fluorinated silane employed was perfluoro-octyl trichloro silane (97%) (B) available as catalog number 44893-1 from Sigma-Aldrich Chemie GmbH (Steinheim, Gennany). The fluorinated silane (B) was dissolved in n-hexane at 0.25 wt. %.

The solution was applied to the reflective fabric and dried in the method described in Example 1.

Fifteen washing cycles were performed on the treated reflective sheet. Retroreflectivity measurements before and after washing were made, both on dry and wet fabrics. Test results are summarized in Table 1.

### Example 4 (comparative)

Example 3 was repeated with the exception that the solution of fluorinated silane (B) was applied to a second reflective fabric described above as the second embodiment of the reflective sheet. Retroreflectivity measurements of wet and dry substrates before and after washing are summarized in Table 1.

### Comparative Examples 1-2

Two untreated reflective sheets described above as the first and second embodiments of the reflective sheet were evaluated for both wet and dry retroreflectivity and then subjected to the same washing tests as specified in the Test Methods. Results are summarized in Table 1.

**Table 1**

| | | | Unwashed Fabric | | Washing cycles | Washed Fabric | |
|---|---|---|---|---|---|---|---|
| Ex. | Fluorosilane type | Fabric type | Dry | Wet | | Dry | Wet |
| | | | R' (cd/lx/m²) | R' (cd/lx/m²) | | R' (cd/lx/m²) | R' (cd/lx/m²) |
| 1 | A | 1 | 816 | 643 | 35 | 687 | 148 |
| 2 | A | 2 | 571 | 460 | 15 | 524 | 340 |
| 3 | B | 1 | 716 | 658 | 25 | 720 | 140 |
| | B | 2 | 507 | 382 | 10 | 503 | 318 |
| C1 | None | 1 | 778 | 540 | 35 | 664 | 0 |
| C2 | None | 2 | 439 | 348 | 10 | 520 | 130 |
| A = Fluorinated polyether silane | | | | | | | |
| B = Perfluorooctyl trichlorosilane | | | | | | | |

## Claims

1. A reflective sheet comprising a reflective element and comprising microspheres partially exposed at a major surface of said reflective sheet and said reflective sheet having been treated at said major surface with a fluorinated silane compound having a fluorinated polyether group and a silane group that has one or more hydrolyzable groups.

2. Reflective sheet according to claim 1 wherein said reflective element comprises a reflective metal layer or a layer comprising a binder having distributed therein one or more reflective pigments.

3. A reflective sheet according to claim 1 wherein said reflective sheet comprises in the order given, microspheres partially exposed at said major surface, a light-transmissible intermediate layer, a reflective metal layer and a binder layer.

4. A reflective sheet according to claim 3 wherein said reflective metal layer has a thickness of from 50 to 150 nanometers.

5. A reflective sheet according to claim 1 wherein said reflective sheet comprises in the order given, microspheres partially exposed at said major surface, a reflective metal layer that generally follows the contours of the non-exposed part of said microspheres and a binder layer.

6. A reflective sheet according to claim 1 wherein said fluorinated silane corresponds to the formula:
R_{f}¹-[-Q-SiY₃₋ₓR¹ ₓ]_{y} (I)
wherein R_{f}¹ represents a monovalent or divalent polyfluoropolyether group, Q represents an organic divalent linking group, R¹ represents a C₁-C₄ alkyl group, Y represents a hydrolyzable group x is 0 or 1 and y is 1 or 2;

7. A reflective sheet according to claim 6 wherein said hydrolyzable group is a halogen, a C₁-C₄ alkoxy group, an acyloxy group or an acyl group.

8. A method of making a reflective sheet according to any of claims 1 to 7 comprising the steps of
(i) providing a reflective sheet comprising a reflective element and comprising microspheres partially exposed at a major surface of said reflective sheet and
(ii) treating said major surface of said reflective sheet with a fluorinated silane compound having a fluorinated polyether group and a silane group that has one or more hydrolyzable groups.

9. A method according to claim 8 wherein said reflective sheet is treated with said fluorinated silane compound in the presence of an acid or base catalyst.

10. A method according to claim 8 or 9 wherein said reflective sheet is treated with said fluorinated silane compound by contacting said reflective sheet with a composition comprising said fluorinated silane compound.

11. A method according to claim 10 wherein said composition is a solution of said fluorinated silane compound in an organic solvent, said solution further comprising water and an acid.

12. A method according to any of claims 8 to 11 wherein said method further comprises a heat treatment at a temperature between 50°C and 180°C.

## Patentansprüche

1. Reflektive Folie, umfassend ein reflektives Element, und umfassend teilweise an einer Hauptfläche der reflektiven Folie freiliegende Mikrosphären und wobei die reflektive Folie an der Hauptfläche mit einer fluorierten Silanverbindung mit einer fluorierten Polyethergruppe und einer Silangruppe, die eine oder mehrere hydrolysierbare Gruppen aufweist, behandelt wurde.

2. Reflektive Folie nach Anspruch 1, wobei das reflektive Element eine reflektive Metallschicht oder eine ein Bindemittel mit einem oder mehreren darin verteilten reflektiven Pigmenten umfassende Schicht umfasst.

3. Reflektive Folie nach Anspruch 1, wobei die reflektive Folie in der angegebenen Reihenfolge teilweise an der Hauptfläche freiliegende Mikrosphären, eine lichtdurchlässige Zwischenschicht, eine reflektive Metallschicht und eine Bindemittelschicht umfasst.

4. Reflektive Folie nach Anspruch 3, wobei die reflektive Metallschicht eine Dicke von 50 bis 150 Nanometer hat.

5. Reflektive Folie nach Anspruch 1, wobei die reflektive Folie in der angegebenen Reihenfolge teilweise an der Hauptfläche freiliegende Mikrosphären, eine reflektive Metallschicht, die allgemein den Umrissen des nicht-freiliegenden Teils der Mikrosphären folgt, und eine Bindemittelschicht umfasst.

6. Reflektive Schicht nach Anspruch 1, wobei das fluorierte Silan der folgenden Formel entspricht:
R_{f}¹-[-Q-SiY₃₋ₓR¹ ₓ]_{y} (I)
wobei R_{f}¹ für eine einwertige oder zweiwertige Polyfluorpolyethergruppe steht, Q für eine organische zweiwertige Verknüpfungsgruppe steht, R¹ für eine C₁-C₄-Alkylgruppe steht, Y für eine hydrolysierbare Gruppe steht; x 0 oder 1 ist und y 1 oder 2 ist.

7. Reflektive Folie nach Anspruch 6, wobei die hydrolysierbare Gruppe ein Halogen, eine C₁-C₄-Alkoxygruppe, eine Acyloxygruppe oder eine Acylgruppe ist.

8. Verfahren zur Herstellung einer reflektiven Folie nach mindestens einem der Ansprüche 1 bis 7, umfassend die Schritte:
(i) Vorsehen einer reflektiven Folie, umfassend ein reflektives Element und umfassend teilweise an einer Hauptfläche der reflektiven Folie freiliegende Mikrosphären und
(ii) Behandeln der Hauptfläche der reflektiven Folie mit einer fluorierten Silanverbindung mit einer fluorierten Polyethergruppe und einer Silangruppe, die eine oder mehrere hydrolysierbare Gruppen aufweist.

9. Verfahren nach Anspruch 8, wobei die reflektive Folie mit der fluorierten Silanverbindung in Gegenwart eines Säure- oder eines Basenkatalysators behandelt wird.

10. Verfahren nach Anspruch 8 oder 9, wobei die reflektive Folie mit der fluorierten Silanverbindung durch Kontaktieren der reflektiven Folie mit einer die fluorierte Silanverbindung umfassenden Zusammensetzung behandelt wird.

11. Verfahren nach Anspruch 10, wobei die Zusammensetzung eine Lösung der fluorierten Silanverbindung in einem organischen Lösungsmittel ist, wobei die Lösung ferner Wasser und eine Säure umfasst.

12. Verfahren nach mindestens einem der Ansprüche 8 bis 11, wobei das Verfahren ferner eine Wärmebehandlung bei einer Temperatur zwischen 50°C und 180°C umfasst.

## Revendications

1. Feuille réfléchissante comprenant un élément réfléchissant et comprenant des microsphères partiellement exposées au niveau d'une surface principale de ladite feuille réfléchissante et ladite feuille réfléchissante ayant été traitée au niveau de ladite surface principale avec un composé fluorosilane comportant un groupe polyéther fluoré et un groupe silane qui possède un ou plusieurs groupes hydrolysables.

2. Feuille réfléchissante selon la revendication 1, dans laquelle ledit élément réfléchissant comprend une couche métallique réfléchissante ou une couche comprenant un liant dans lequel est ou sont réparti(s) un ou plusieurs pigments réfléchissants.

3. Feuille réfléchissante selon la revendication 1, dans laquelle ladite feuille réfléchissante comprend, dans l'ordre indiqué, des microsphères partiellement exposées au niveau de ladite surface principale, une couche intermédiaire transmettant la lumière, une couche métallique réfléchissante, et une couche de liaison.

4. Feuille réfléchissante selon la revendication 3, dans laquelle ladite couche métallique réfléchissante a une épaisseur de 50 à 150 nanomètres.

5. Feuille réfléchissante selon la revendication 1, dans laquelle ladite feuille réfléchissante comprend, dans l'ordre indiqué, des microsphères partiellement exposées au niveau de ladite surface principale, une couche métallique réfléchissante qui suit généralement les contours de la partie non exposée desdites microsphères, et une couche de liaison.

6. Feuille réfléchissante selon la revendication 1, dans laquelle ledit fluorosilane correspond à la formule :
R_{f}¹-[-Q-SiY_{3X}R¹ₓ]_{y} (I)
dans laquelle R_{f}¹ représente un groupe polyfluoropolyéther monovalent ou divalent, Q représente un groupe de liaison divalent organique, R¹ représente un groupe alkyle en C₁-C₄, Y représente un groupe hydrolysable, x vaut 0 ou 1 et y vaut 1 ou 2.

7. Feuille réfléchissante selon la revendication 6, dans laquelle ledit groupe hydrolysable est un halogène, un groupe alkoxy en C₁-C₄, un groupe acyloxy ou un groupe acyle.

8. Méthode de fabrication d'une feuille réfléchissante selon l'une quelconque des revendications 1 à 7, comprenant les étapes qui consistent à :
(i) fournir une feuille réfléchissante comprenant un élément réfléchissant et comprenant des microsphères partiellement exposées au niveau d'une surface principale de ladite feuille réfléchissante, et
(ii) traiter ladite surface principale de ladite feuille réfléchissante avec un composé fluorosilane comportant un groupe polyéther fluoré et un groupe silane qui possède un ou plusieurs groupes hydrolysables.

9. Méthode selon la revendication 8, dans laquelle ladite feuille réfléchissante est traitée avec ledit composé fluorosilane en présence d'un catalyseur qui est un acide ou une base.

10. Méthode selon la revendication 8 ou 9, dans laquelle ladite feuille réfléchissante est traitée avec ledit composé fluorosilane par mise en contact de ladite feuille réfléchissante avec une composition comprenant ledit composé fluorosilane.

11. Méthode selon la revendication 10, dans laquelle ladite composition est une solution dudit composé fluorosilane dans un solvant organique, ladite solution comprenant en outre de l'eau et un acide.

12. Méthode selon l'une quelconque des revendications 8 à 11, dans laquelle ladite méthode comprend en outre un traitement thermique à une température entre 50 °C et 180 °C.
